# EUROPEAN PATENT SPECIFICATION

(11) **EP 4 093 573 B1**
(45) Date of publication and mention of the grant of the patent: **09.10.2024**
(21) Application number: 21700977.8
(22) Date of filing: 22.01.2021
(51) Int. Cl.: B23K 26/03, B23K 26/046, B23K 26/38, B23K 26/40

(54) **METHOD FOR LASER MACHINING A WORKPIECE AND APPARATUS FOR LASER MACHINING A WORKPIECE**
VERFAHREN ZUM LASERBEARBEITEN EINES WERKSTÜCKS UND VORRICHTUNG ZUM LASERBEARBEITEN EINES WERKSTÜCKS
DISPOSITIF D'USINAGE LASER ET PROCÉDÉ D'USINAGE LASER D'UNE PIÈCE

(30) Priority: 22.01.2020 EP 20153052
(43) Date of publication of application: 30.11.2022
(73) Proprietor: Bystronic Laser AG, 3362 Niederönz (CH)
(72) Inventor: LÜDI, Andreas, 3400 Burgdorf (CH); HAAS, Titus, 4800 Zofingen (CH); BADER, Roland, 4933 Rütschelen (CH)
(74) Representative: Patentanwälte Geyer, Fehners & Partner mbB
(86) International application number: PCT/EP2021/051474
(87) International publication number: WO 2021/148616

(56) References cited:
- WO-A1-2016/181359
- DE-A1- 102010 020 183
- JP-A- 2002 331 383
- US-A1- 2016 193 692

## Description

The present invention relates to a method for laser machining a workpiece, an apparatus for laser machining a workpiece and a use of an apparatus for laser machining a workpiece.

Laser machining apparatuses are used in laser machining workpieces, in particular in methods for the thermal separation of materials by means of a laser beam, such as laser cutting. In many cases, a laser machining head is used to guide the machining laser beam onto the workpiece, for example onto a metal sheet to be machined.

When laser cutting with an active cutting gas, such as oxygen, the metallic material of the workpiece is burned, for example, after it has been heated to the ignition temperature by the laser beam. This type of laser cutting is also called flame cutting. The reaction between oxygen and the material of the workpiece generates additional heat that supports the cutting process. The melted liquid material, which has a low viscosity, can be removed from the cut edge or from the cutting gap by the shear forces of the gas. When cutting with an inert gas such as nitrogen or argon, the material of the workpiece is only melted by the laser power and can be blown out of the cutting gap by the kinetic energy of the gas stream. This type of laser cutting is also called fusion cutting. The process illumination (inherent illumination) generated during the laser cutting process and emitted by the workpiece, which are recorded with suitable detectors, can be used to monitor the cutting process and the cutting gap. In addition, the laser machining zone of the workpiece can be illuminated, whereby the beam reflected and/or emitted by the workpiece can be detected.

The focus of the machining laser beam can experience a focus shift (shifting of the focus) over time and with increasing power, in particular due to the heating of optical elements that are used for optical imaging of the laser beam. This undesirably induced focus shift affects the machining result. To counteract a focus shift and to be able to cut stably, process parameters can be given sufficiently large tolerances. However, the focus often shifts to an unfavourable position or location, which leads to a reduced cut quality.

US2018029164 A1 describes a measurement of the focus position. However, the focus position is measured in the cutting head, which makes the cutting head expensive, heavy, and complicated.

According to DE 100 45 191 A1, thermal variables in the cutting head and computational derivatives thereof are used to be able to compensate for beam changes in real time.

DE102016219928 A1 relates to a method in which the focus position relative to the workpiece is determined by means of camera-based cutting gap measurement. The focus position is determined by the determined cutting gap width. For this purpose, the caustic of the laser beam must be measured, which makes calibration steps necessary. Furthermore, the focus position must be determined repeatedly in the course of the method. The process is therefore complex.

The methods to compensate for a focus shift from the aforementioned documents are therefore dependent on indirect measurements, and are complicated and/or time-consuming to carry out.

DE102010020183 A1 relates to a laser cutting head and a method for cutting a workpiece. The control process includes the acquisition of current process parameters such as cutting gas pressure, feed rate, focus position or laser power of the laser cutting head and the setting of the process parameters by a control unit in order to adjust the current width of the cutting gap to a predetermined value.

WO2016/181359 A1 describes a laser processing device with an arrangement for generating and guiding a working laser beam and with at least one group of detector arrangements which are sensitive to radiation characteristic of the processing operation.US 2016/0193692 A1 relates to devices and methods for monitoring or regulating a cutting process on a workpiece.

JP2002331383 A describes a monitoring device for cutting, with which the current cutting width is compared with a previously specified cutting width and a cutting error is determined in the event of a deviation resulting therefrom.

The object of the invention is to provide a method and an apparatus with which an undesired focus shift can be counteracted in a simple manner.

This object is achieved by a method according to claim 1, an apparatus according to claim 10, and a use according to claim 17.

In one embodiment, a method for laser machining a workpiece is provided, with a) generating a machining laser beam and imaging the machining laser beam on the workpiece with at least one optical element; b) machining the workpiece with the imaged machining laser beam and generating a cutting gap in the workpiece; c) monitoring at least one geometric parameter of the cutting gap during step b); and d) regulating the monitored geometric parameter of the cutting gap during step c) for harmonisation with a target value of the geometric parameter of the cutting gap, wherein step d) is carried out by varying a position of the focus of the machining laser beam in the direction of propagation thereof and additionally by varying at least one parameter selected from a width of the machining laser beam, a diameter of the machining laser beam, a surface curvature of at least one of the optical elements (17; 18), a focal length of an optical system that includes the at least one optical element, and an intensity distribution of the machining laser beam, in particular an intensity distribution of the machining laser beam perpendicular to the direction of propagation thereof; wherein step d) is carried out independently of a caustic of the machining laser beam; wherein in step d) the geometric parameter, in particular the width (B) of the cutting gap, is kept independent of the power of the machining laser source (14a).

Since the at least one geometric parameter of the cutting gap is monitored and controlled during laser machining, the focus position need not be determined. The method is therefore not very time-consuming, does not require calibration, and is easy to implement.

Step d) can be carried out by adapting the imaging of the machining laser beam on the workpiece. If one or more of the monitored geometric parameters of the cutting gap deviates from the respective desired target value, for example, the focus position is corrected.

In the method of embodiments, step d) can be carried out independently of a position of the beam waist of the machining laser beam. The method is therefore not very time-consuming, does not require calibration, and is easy to implement.

In embodiments, the target value of the geometric parameter used in step d) can be or is determined as a function of at least one element selected from: a type of laser machining; a material of the workpiece; a thickness of the workpiece; a shape of the workpiece; a power of the machining laser source with which the machining laser beam is generated; an angle of incidence of the machining laser beam on the workpiece; a beam parameter product (BPP) of the machining laser beam; a focus diameter of the machining laser beam; and, a divergence angle of the machining laser beam. For example, the target value of the respective geometric parameter can be determined as a function of the type of laser cutting. For example, a target value can be selected for flame cutting that differs from that for fusion cutting. The target value can be determined by a device for regulating the monitored geometric parameter and/or a controller and/or can be specified by an operator. For example, the target value can be taken from a look-up table.

In the method of embodiments, the at least one geometric parameter can be selected or is selected from a width of the cutting gap, a cutting front angle of the cutting gap, a surface structure of a cut edge of the cutting gap, a roughness of a cut edge of the cutting gap, a shape of the workpiece at the cutting gap, a width of a beam reflected and/or emitted by the workpiece, and/or a shape of a beam reflected and/or emitted by the workpiece. For example, the cutting gap is observed and the width thereof is monitored. The cutting gap symmetry of the cutting gap can be used to monitor the surface structure thereof. The at least one geometric parameter can/be determined by a device for regulating the monitored geometric parameter and/or a controller and/or can be specified by an operator. For example, the at least one geometric parameter can be taken from a look-up table.

According to embodiments of the method, the geometric parameter, in particular the width of the cutting gap, can be kept constant in step d). These embodiments allow flexible and, at the same time, simple regulation of the geometric parameter.

In further embodiments, flame cutting can be carried out and step d) can be carried out by repeated and/or continuous adaptation of the focus of the machining laser beam in the upper half of the cutting gap or above the cutting gap. Furthermore, fusion cutting can be carried out and step d) can be carried out by repeated and/or continuous adaptation of the focus of the machining laser beam in the lower half of the cutting gap. In this way, with different types of laser cutting, by varying the focus position of the machining laser beam, the geometric parameters of the cutting gap can be corrected in the event of deviations from the target value.

In methods from embodiments, in step c) a beam reflected and/or emitted by the workpiece, in particular by a laser machining zone of the workpiece, can be recorded with a detector, in particular with a camera. This enables precise and simple monitoring of the geometric parameter of the cutting gap.

According to embodiments of the method, the workpiece, in particular a laser machining zone of the workpiece, can be illuminated in step c), in particular with an illumination source or an illuminating laser beam. In this way, the monitoring of the geometric parameter is supported.

In embodiments of the method, the at least one optical element can be heated by the machining laser beam in step a). Furthermore, in step a) the machining laser beam can be shaped, deflected, diverted, and/or reflected by the at least one optical element. In all these cases, the method enables undesired deviations of the geometric parameter from the target value to be compensated.

A further embodiment provides an apparatus for laser machining a workpiece, in particular for laser cutting, in particular with a method according to any one of the preceding embodiments. The apparatus is provided with
- a machining laser source for generating a machining laser beam;
- at least one optical element for imaging the machining laser beam on the workpiece;
- a device for monitoring at least one geometric parameter of a cutting gap in the workpiece generated with the machining laser beam; and
- a device for regulating the monitored geometric parameter of the cutting gap for harmonisation with a target value of the geometric parameter for the cutting gap; wherein the device for regulating the monitored geometric parameter is designed or is adaptable in such a way that a position of the focus of the machining laser beam is varied in the direction of propagation thereof, and additionally in such a way that at least one parameter is varied, selected from a width of the machining laser beam, a diameter of the machining laser beam, a surface curvature of at least one of the optical elements, a focal length of an optical system which contains the at least one optical element, and an intensity distribution of the machining laser beam, in particular an intensity distribution of the machining laser beam perpendicular to the direction of propagation thereof; wherein the device for regulating the monitored geometric parameter is designed or is adaptable in such a way that the geometric parameter is regulated independently of a caustic of the machining laser beam; wherein the device (22) for regulating the monitored geometric parameter is designed or is adaptable in such a way that the geometric parameter, in particular the width (B) of the cutting gap, is kept independent of the power of the machining laser source (14a).

The device for regulating the monitored geometric parameter can be designed or be adaptable in such a way that the imaging of the machining laser beam on the workpiece is adjusted. Suitable optical components, for example suitable for static and/or dynamic beam shaping, can be used as the at least one optical element to vary the aforementioned parameters. For example, an adjustable focusing lens, an adjustable collimating lens, a mirror with adjustable surface curvature, or a combination thereof can be provided as an optical element.

In further embodiments, the device for regulating the monitored geometric parameter can be designed or be adaptable in such a way that the geometric parameter is regulated independently of a position of the beam waist of the machining laser beam.

In embodiments of the apparatus, the target value of the geometric parameter used in step d) can be determined as a function of at least one element selected from: a type of laser machining; a material of the workpiece; a thickness of the workpiece; a shape of the workpiece; a power of the machining laser source with which the machining laser beam is generated; an angle of incidence of the machining laser beam on the workpiece; a beam parameter product (BPP) of the machining laser beam; a focus diameter of the machining laser beam; and, a divergence angle of the machining laser beam. The target value can be determined by the device for regulating the monitored geometric parameter and/or a control of the apparatus and/or can be specified by an operator. For example, the target value can be taken from a look-up table.

In embodiments, the at least one geometric parameter can be selected from a width of the cutting gap, a cutting front angle of the cutting gap, a surface structure of a cut edge of the cutting gap, a roughness of a cut edge of the cutting gap, a shape of the workpiece at the cutting gap, a width of a beam reflected and/or emitted by the workpiece, and/or a shape of a beam reflected and/or emitted by the workpiece. The cutting gap symmetry of the cutting gap can be used to monitor the surface structure thereof. The at least one geometric parameter can be determined by the device for regulating the monitored geometric parameter and/or a control of the apparatus and/or can be specified by an operator. For example, the at least one geometric parameter can be taken from a look-up table.

In the apparatus of embodiments, the device for regulating the monitored geometric parameter can be designed or be adaptable in such a way that the geometric parameter, in particular the width of the cutting gap, is kept constant.

Furthermore, the device for regulating the monitored geometric parameter can be designed or be adaptable in such a way that for flame cutting the focus of the machining laser beam is repeatedly and/or continuously adjusted in the upper half of the cutting gap or above the cutting gap. Alternatively or additionally, the device for regulating the monitored geometric parameter can be designed or be adaptable in such a way that for fusion cutting the focus of the machining laser beam is repeatedly and/or continuously adapted in the lower half of the cutting gap. Furthermore, the device for monitoring the at least one geometric parameter can include a detector, in particular a camera, for recording a beam reflected and/or emitted by the workpiece, in particular by a laser machining zone of the workpiece. Furthermore, a device for illuminating the workpiece, in particular a laser machining zone of the workpiece, in particular an illumination source or an illuminating laser beam, can be provided in the apparatus of embodiments. In addition, the at least one optical element can be designed or be adaptable in such a way that the machining laser beam is shaped, deflected, diverted, and/or reflected.

One embodiment provides a use of an apparatus according to one of the preceding embodiments defined in claim 17.

With the apparatus for laser machining a workpiece of the above embodiments, the same advantages and functions can be realised as with the embodiments of the method for laser machining a workpiece, in particular with identical and/or analogous features.

Further features and advantages arise from the following description of embodiments, the figures, and the dependent claims.

The same elements of the embodiments are given the same reference symbols in the following description. Embodiments of the invention are now described in more detail using the following examples with reference to figures, without intending any limitation thereby. In the figures:
- Fig. 1: schematically shows a first example of an apparatus for laser machining a workpiece according to embodiments of the invention;
- Fig. 2: schematically shows a sequence of operation of a method for laser machining a workpiece according to embodiments of the invention;
- Figs. 3a and 3b: schematically show focus positions during fusion cutting and flame cutting;
- Figs. 4a and 4b: schematically show an example of a determination of a cutting gap width according to embodiments of the invention; and
- Fig. 5: schematically shows a further example of a determination of a cutting gap width according to embodiments of the invention.

### Examples

The apparatus for laser machining according to the embodiments of the invention is described below, inter alia, by way of examples with a machining head, without limiting the invention thereto. The apparatus and the method according to the embodiments of the invention can also be realised without a machining head.

The terms "laser beam" and "machining laser beam" are used synonymously. The apparatus for laser machining is also called a machining apparatus here. The terms "optical imaging" and/or "imaging the laser beam on the workpiece" in the present case mean that the laser beam is directed onto the workpiece, for example by refraction, reflection, diffraction, and/or beam shaping. The term "caustic" of the laser beam denotes in particular the envelope of the beam waist of the laser beam and/or the change in the diameter of the laser beam perpendicular to the direction of propagation thereof in the region of the beam waist thereof. The terms "width of the cutting gap" and "cutting gap width" are used synonymously. The position of the focus is also called the focus position or focus location here. The term "upper half of the cutting gap" means the half of the cutting gap that is arranged on the surface of the workpiece that faces the machining laser beam and/or the apparatus for the laser machining. The term "lower half of the cutting gap" means the half of the cutting gap that is arranged on the surface of the workpiece that faces away from the machining laser beam and/or the apparatus for the laser machining. The term "above the cutting gap" means the region adjacent to the cutting gap that is arranged on the surface of the workpiece that faces the machining laser beam and/or the apparatus for the laser machining. The above also applies analogously to modifications of these terms.

Furthermore, where value ranges are described here, the specification of a broad range with narrower alternative or preferred ranges is also considered to disclose ranges that can be formed by any combination of specified lower range limits and specified upper range limits.

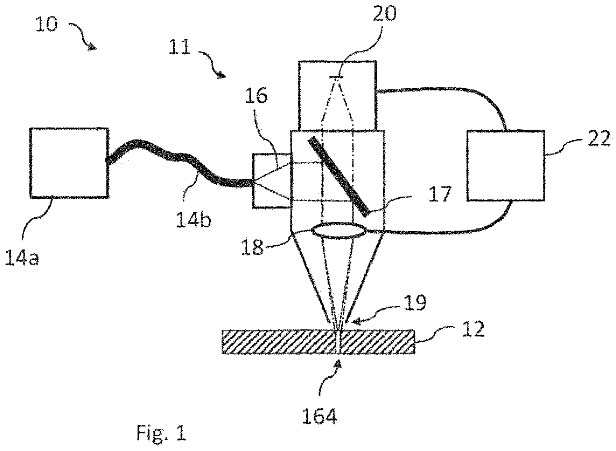

Fig. 1 schematically represents a first example of an apparatus 10 for laser machining a workpiece 12 according to embodiments of the invention.

In the present example, the apparatus 10 has a machining head 11. A machining laser source 14a for generating a machining laser beam 16 is coupled laterally thereto via a transport fibre 14b. In alternative examples, the coupling of the laser source can also take place at another point on the machining head. The machining laser source 14a has a power of approximately 6 kW and generates the machining laser beam 16 in a spectral range which includes a wavelength of 1070 nm. However, other powers and/or spectral ranges suitable for the laser machining, in particular laser cutting, can also be selected.

In the present example, a dichroic mirror 17 is provided as an optical element in the machining head 11, which diverts the machining laser beam 16 in the direction of an exit opening 19 of the machining head. The dichroic mirror 17 is at least partially transparent to a beam emitted by the workpiece 12.

In the region of the machining head 11 between the dichroic mirror 17 and the exit opening 19, a focusing lens 18 is provided as a further optical element, which can be displaced parallel to the direction of propagation of the machining laser beam 16 to adjust the position of the focus of the machining laser beam, e.g., by means of a holder. The focusing lens 18 is at least partially transparent to a beam emitted by the workpiece 12.

A detector 20 is also provided in the machining head 11 in such a way that the dichroic mirror 17 is located between the focusing lens 18 and the detector 20. The detector 20 serves as a device for monitoring at least one geometric parameter of a cutting gap generated in the workpiece 12 with the machining laser beam 16 and coaxially records the laser machining zone during the laser machining. The recordings obtained in this way are reproduced at the moment of laser machining, i.e., live, on a monitor (not shown) and optionally saved. In the present example, the detector 20 is designed as a high-resolution video camera which is at least partially sensitive to the beam emitted by the workpiece 12. If, for example, a workpiece made of metal such as stainless steel is processed, the inherent emission during laser machining is thermal and lies in the near-infrared range of 760 to 2500 nm. Since the inherent emission of the workpiece is observed in the present example, the detector 20 is at least partially sensitive to the corresponding wavelength range.

In alternative examples, the detector 20 can also be arranged elsewhere in or outside of the machining head 11 and detect a beam emitted and/or reflected by the workpiece 12 there. In further examples, other radiation-sensitive detectors, such as photodiodes, can be provided. If, alternatively or additionally, the workpiece is illuminated by means of an illumination source or an illuminating laser beam, in particular to clearly see the cutting gap width, and if the beam reflected by the workpiece is detected, the detector is (also) at least partially sensitive thereto and is the at least one optical element (also) at least partially transparent therefor.

The detector 20 and the focusing lens 18 are connected to one another in a data-conducting manner via a device 22 for regulating the monitored geometric parameter of the cutting gap. The device 22 can be implemented in a controller of the apparatus 10 for the laser machining. In the present example, the geometric parameter to be monitored and an associated target value for the regulation by an operator of the apparatus 10 are specified. For this purpose, the operator inputs the geometric parameter and the target value into the device 22 for regulating the monitored geometric parameter. Alternatively, the geometric parameter to be monitored and/or the target value for the regulation can be determined and specified by the device 22 for regulating the monitored geometric parameter or the controller.

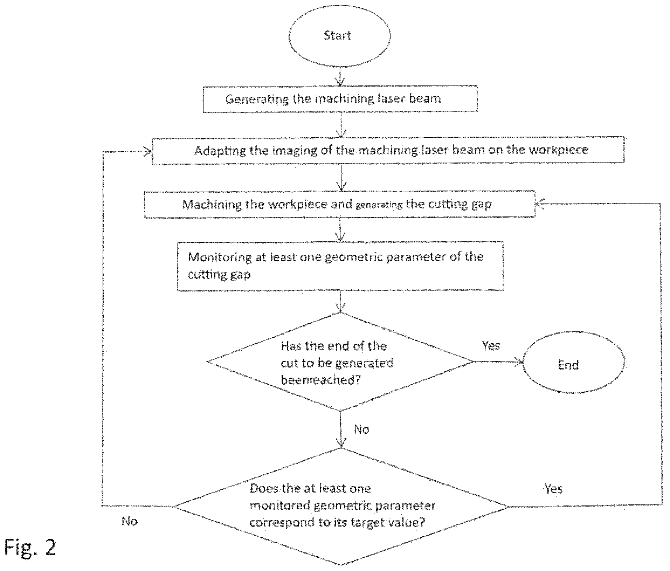

A method for laser machining the workpiece 12 according to embodiments is shown schematically in Fig. 2. The method is described below using the apparatus 10 as an example.

When the apparatus 10 is in operation, the machining laser beam 16 is generated and imaged on the workpiece with the dichroic mirror 17 and the focusing lens 18. The workpiece is machined with the machining laser beam 16, wherein the machining laser beam 16 is guided over the workpiece. In the process, a cut with a cutting gap 164 is produced in the workpiece 12. The beam produced during laser cutting by the inherent emission of the workpiece 12 reaches at least through the exit opening 19 into the machining head 11. There it penetrates the focusing lens 18 and the dichroic mirror 17, both of which are at least partially transparent to the beam of the workpiece's inherent emission. The beam from the inherent emission finally reaches the detector 20 and is recorded there by the video camera. In this way, in the present example, the width B of the cutting gap is monitored as a geometric parameter of the cutting gap 164. The video recordings obtained in this way are passed into the device 22 for regulating the monitored geometric parameter, stored, and evaluated. The video recordings can be played back on a monitor (not shown) at the moment of laser machining, i.e., live.

In the present example, the device 22 for regulating the geometric parameter of the cutting gap is used to compare the width B thereof as the geometric parameter with the predetermined target value. For this purpose, an actual value for the current cutting gap width B is determined from the images of the inherent emission recorded with the video camera. As long as the end of the cut to be produced in the workpiece 12 has not been reached, the device 22 checks whether the width B of the cutting gap corresponds to the predetermined target value. If this is the case, machining of the workpiece and monitoring of the cutting gap width are continued with the previously adjusted imaging of the machining laser beam 16. If the cutting gap width B does not correspond to the specified target value, the imaging of the machining laser beam 16 on the workpiece 12 is changed by means of the focusing lens 18 in such a way that the cutting gap width B corresponds to the desired target value. This is done by shifting the focusing lens 18 parallel to the direction of propagation of the machining laser beam 16. As a result, the position of the focus 162 of the machining laser beam 16 is adjusted in such a way that the cutting gap width B is corrected to the target value. The method with the regulation carried out in this way is continued until reaching the end of the cut to be produced.

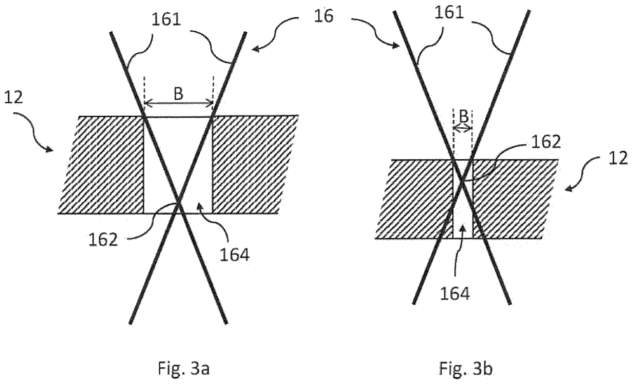

Figs. 3a and 3b schematically illustrate suitable positions of the focus 162 of the machining laser beam 16 during flame cutting and during fusion cutting. In Figs. 3a and 3b, the machining laser beam 16 is shown with outer boundaries 161 and a focus 162. The machining laser beam 16 is focused on the workpiece 12 shown in cross-section. According to the focus positions shown in Figs. 3a and 3b, the focus 162 lies within the cutting gap 164 generated in the workpiece 12. The width B of the cutting gap 164 is indicated by a double arrow.

If the method of the above example is carried out as fusion cutting, the cutting gap 164 is produced with a desired width B in that the focus 162 of the machining laser beam is adjusted and held in the lower region of the workpiece 12, as shown in Fig. 3a. If the method of this example is carried out as flame cutting, the cutting gap 164 is produced with a desired width B by the focus 162 of the machining laser beam being adjusted and held in the upper region of the workpiece 12, as is shown in Fig. 3b. Alternatively, during flame cutting, the focus 162 can be adjusted and held above the workpiece 12 and the cutting gap 164 produced (not shown). In this way, a good quality of the cutting gap 164 and an ideal width B of the cutting gap are achieved in each case. The respective ideal width B of the cutting gap is used here as a target value.

In the present example, the cutting gap 164 is observed with the video camera of the detector 20 and the cutting gap width B is monitored as a geometric parameter. For example, the cutting gap width can change in the course of the laser cutting through heating of the focusing lens 18 and/or other optical elements. If the cutting gap width B deviates from the ideal width, that is to say from the target value, the focus position is shifted by the device 22 for regulating the cutting gap width. In the method of this example, the shift of the focus position takes place by shifting the focusing lens 18. The direction in which the focus position for the cutting gap width correction is shifted can result from suitable focus positions for the respective type of laser cutting. Focus positions are suitable for the present example, as explained above for Figs. 3a and 3b. If the cutting gap width B becomes smaller during the laser cutting, the focusing lens 17 is moved in the direction of the workpiece 12 and the focus 162 is shifted into the lower region of the workpiece. If the cutting gap 164 is widened, this is compensated for by adjusting the focusing lens 17 and increasing the distance thereof from the workpiece 12, the focus position being shifted into the upper region of the workpiece 12. If the shift in the focus position does not lead to the desired cutting gap width B, i.e., the target value, this is determined immediately with the detector 20 and a corresponding renewed focus position shift, for example in the other direction, is initiated to regulate the cutting gap width B.

During fusion cutting in the present example, the focus 162 is first adjusted in the lower region of the cutting gap, as shown in Fig. 3a. If the monitored cutting gap width decreases in the course of fusion cutting, e.g., because the focus moves into the upper region of the workpiece 12 as shown in Fig. 3b, the cutting gap width is regulated by adjusting the focusing lens 18 and shifting the focus position into the lower half of the cutting gap in such a way that the cutting gap width B again corresponds to the target value, as shown in Fig. 3a. In the case of flame cutting in the present example, the focus 162 is first adjusted in the upper region of the cutting gap 164, as shown in Fig. 3b. If the monitored cutting gap width B increases in the course of the flame cutting, e.g., because the focus moves into the lower region of the workpiece 12 as shown in Fig. 3a, a regulation of the cutting gap width is carried out by adjusting the focusing lens 18 and moving the focus position into the upper half of the cutting gap so that the cutting gap width again corresponds to the target value, as shown in Fig. 3b. In this way, the cutting gap width is kept essentially constant.

The method of the above example and the regulation of the cutting gap width as a geometric parameter are carried out with the aid of the adjustable focusing lens 18. In machining heads (cutting heads) that do not have an adjustable focusing lens, the focus position can be shifted analogously with other optical elements, for example with adjustable collimation lenses or mirrors with adjustable surface curvature. For example, the dichroic mirror 17 can have a mirror surface, the curvature of which can be adjusted by means of actuators, while the focusing lens 18 is not adjustable. However, a combination of several adjustable optical elements, for example a combination of a mirror with adjustable curvature and an adjustable focusing lens, can also be used.

Furthermore, the method of the above example and the regulation of the cutting gap width is carried out as geometric parameters not only by varying a position of the focus of the machining laser beam in the direction of propagation thereof, but additionally also by varying at least one parameter selected from a width of the machining laser beam, a diameter of the machining laser beam, a surface curvature of at least one of the optical elements, a focal length of an optical system that includes the at least one optical element, and/or an intensity distribution of the machining laser beam, in particular an intensity distribution of the machining laser beam perpendicular to the direction of propagation thereof. An intensity distribution can be varied, for example, with static and/or dynamic beam shaping.

In a modification of the above example, an illuminating laser source (not shown) is provided on the machining head 11 in the apparatus 10 in addition to the machining laser source 14a. The illuminating laser source together with the machining laser source 14a is coupled to the transport fibre 14b in such a way that the machining laser beam 16 and the illuminating laser beam generated by the illuminating laser source are guided coaxially into and through the machining head 11 and finally coaxially through the exit opening 19. The illuminating laser source can, however, also be provided at a different position, starting from which the illuminating laser beam is guided onto the laser machining zone of the workpiece 12. The illuminating laser source has a power of approximately 1000 mW and generates the illuminating laser beam with a central wavelength within a spectral range of 973 to 979 nm, with a wavelength band of 6 nm. The focusing lens 18 and the dichroic mirror 17 are at least partially transparent to a beam in this wavelength range. The video camera of the detector 20 is at least partially sensitive to this wavelength range.

For machining a workpiece 12, the machining laser source 14a and the illuminating laser source are put into operation with the powers and spectral ranges described above. The machining laser beam and illuminating laser beam generated in this way are directed onto the workpiece 11 by means of the machining head 11. In this way, the workpiece is processed with the machining laser beam 16, as a result of which inherent emission of the workpiece is generated in the laser machining zone. In addition, the laser machining zone of the workpiece 12 is illuminated by the illuminating laser beam. The illuminating laser beam, which is at least partially reflected by the workpiece 12, strikes at least partially through the focusing lens 18 and the dichroic mirror 13 on the video camera of the detector 20. By illuminating the laser machining zone, the environment of the laser machining zone, in particular the cutting gap geometry and thus the cutting gap width, can be made particularly clearly visible. The laser machining of the workpiece 12 is thus observed and the width B of the cutting gap produced is monitored with the detector 20. The width of the cutting gap is controlled with the device 22 for regulating the geometric parameter by adjusting the focusing lens 18 in such a way that the width of the cutting gap corresponds to the target value, as explained above. In this way, the cutting gap width is kept essentially constant.

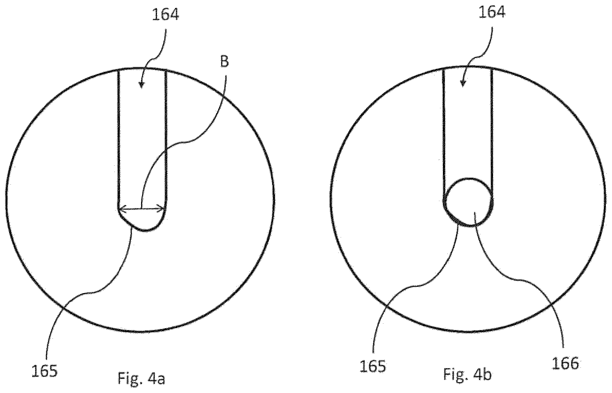

Figs. 4a and 4b illustrate how an actual value for the cutting gap width can be determined in the method of the preceding examples. Fig. 4a schematically shows a coaxial recording of the laser machining zone illuminated with the illuminating laser source with the cutting gap 164 obtained with the video camera of the detector 20 during laser cutting with the machining laser beam. The cutting gap 164 recorded has a front region 165 in which the laser machining is currently taking place. The region 165 is shown as approximately semi-circular in Fig. 4a, but can also have a different shape, the dimensions of which in any case reflect the current width B of the cutting gap on the scale of the recording. To determine the value of the current width B of the cutting gap 164 (actual value), a simulated circle 166 is fitted to the region 165 in the video recording with the device 22 for regulating the monitored geometric parameter, as shown in Fig. 4b. The region 165 is superimposed with different diameters of the circle 166 known from calibration. The current width of the region 165 is determined by comparison with the known diameters of the circle 166. In this way, the current width B of the cutting gap 164 is determined as the actual value.

Alternatively, an actual value for the cutting gap width and the regulation thereof can be used, for the determination of which no calibrated known diameter of the circle 166 shown in Figs. 4a and 4b is required. During the laser cutting, the circle 166 is continuously fitted over the width B of the cutting gap 164 to the region 165 in the video recording. To monitor the cutting gap width, the diameter of the circle 166 is monitored as the actual value. To regulate the cutting gap width, the diameter of the circle 166 is brought into agreement with a target value for the diameter of the circle 166, which corresponds to the target value of the cutting gap width. This is done by means of the device 22 for regulating the monitored geometric parameter by adjusting the focusing lens 18 as described in the preceding examples.

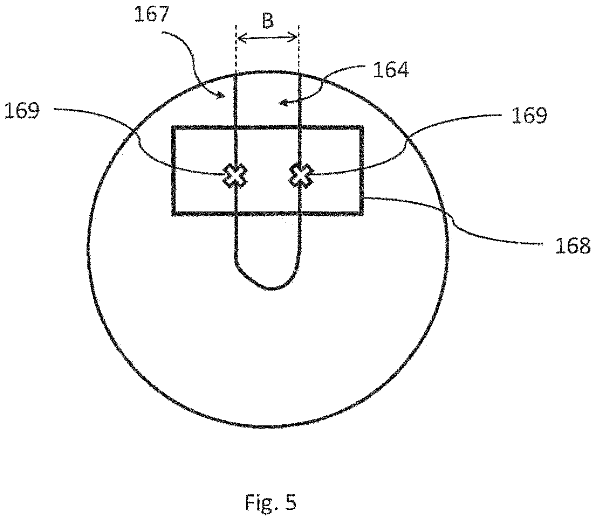

Fig. 5 illustrates another possibility of how an actual value for the cutting gap width can be determined in the method of the preceding examples. Fig. 5 also schematically shows a coaxial recording of the laser machining zone illuminated with the illuminating laser source with the cutting gap 164, obtained with the video camera of the detector 20 during the laser cutting. The recorded cutting gap 164 has a rear region 167 in which the laser machining took place shortly before. In a predefined region 168 of the recording (drawn as a rectangle), which partially contains the rear region 167 of the cutting gap, high degrees of brightness of the recording are targeted, the opposite cut edges of the cutting gap 164 correspond, and reflect the current width B of the cutting gap in the scale of the recording. The opposite cut edges of the targeted degrees of brightness are marked in the recording with two crosses 169, the distance between which is known through calibration. By comparison with the known distance between the crosses 169, the width B of the cutting gap 164 is determined as the actual value. For example, the camera recording can be calibrated. This means that the absolute size/extent of the pixels in the recording and the distance from pixel to pixel are known. Once the position and the distance of the crosses, or the distance of the associated pixels, have been determined in the camera recording, the cutting gap width on the workpiece can be calculated immediately and quantitatively.

Alternatively, the crosses 169 in the example in Fig. 5 can be continuously fitted to the width B of the cutting gap 164 during the laser cutting relating to a high degree of brightness of the region 167. To monitor and regulate the cutting gap width, the distance between the crosses 169 is monitored as an actual value. If this deviates from the predetermined target value, the actual value is adjusted to the target value and kept as constant as possible through regulation by means of the device 22 as described above.

The actual value determinations described with reference to Figs. 4a, 4b and 5 can also be supported by binarising the respective video recording, displaying the binarised data complementarily, i.e., with reciprocal brightness values, and the recorded section the edge extending beyond the laser machining zone is masked. In the processed recordings obtained in this way, the structures that are decisive for the width of the cutting gap, such as the region 165 in Figs. 4a, 4b, or the cut edges to be marked with the crosses 169 in Fig. 5, can be displayed with more contrast-rich and/or more distinctive degrees of brightness and be more easily recognized.

The target value determination for the cutting gap width in the above example and in modifications thereof can take place on the basis of cut workpieces produced with an optimal cutting gap width and based on data and process parameters that were recorded with the detector 20 when these workpieces were produced. This can be carried out taking into account not only one type of laser machining but, alternatively or additionally, also taking into account a material of the workpiece, a thickness of the workpiece, a shape of the workpiece, a power of the machining laser source with which the machining laser beam is generated, an angle of incidence machining laser beam on the workpiece, a beam parameter product (BPP, Beam Parameter Product) of the machining laser beam, a focus diameter of the machining laser beam, and/or a divergence angle of the machining laser beam. For example, the target value can be taken from a corresponding look-up table.

The explanations of the above example and modifications thereof apply analogously to examples and embodiments in which, alternatively or additionally to the cutting gap width, other geometric parameters of the cutting gap are monitored and controlled. These include a cutting front angle of the cutting gap, a surface structure of a cut edge of the cutting gap, a roughness of a cut edge of the cutting gap, and/or a shape of the workpiece at the cutting gap. Furthermore, this includes a width of a beam reflected and/or emitted by the workpiece and/or a shape of a beam reflected and/or emitted by the workpiece. The process illumination that occurs during the laser machining process can be understood as a beam emitted by the workpiece.

Finally, it should be noted that the description of the invention and the exemplary embodiments are not to be understood as limiting in terms of a particular physical realisation of the invention. All of the features explained and shown in connection with individual embodiments of the invention can be provided in different combinations in the subject matter according to the invention covered by the claims to simultaneously realise the advantageous effects thereof.

The scope of protection of the present invention is given by the claims and is not limited by the features illustrated in the description or shown in the figures.

### List of reference symbols

- 10: Machining apparatus
- 11: Machining head
- 12: Workpiece
- 14a: Machining laser source
- 14b: Transport fiber
- 16: Machining laser beam
- 17: Optical element; dichroic mirror
- 18: Optical element; focusing lens
- 19: Outlet opening
- 20: Device for monitoring the geometric parameter; detector; video camera
- 22: Device for regulating the geometric parameter
- 161: Limit of the machining laser beam
- 162: Focus of the machining laser beam
- 164: Cutting gap
- 165: Front region of the cutting gap
- 166: Circle
- 167: Rear region of the cutting gap
- 168: Area of recording
- 169: Cross
- B: Width of the cutting gap

## Claims

1. A method for laser machining a workpiece, in particular for laser cutting, with
a) generating a machining laser beam (16) and imaging the machining laser beam on the workpiece (12) with at least one optical element (17, 18);
b) machining the workpiece (12) with the imaged machining laser beam and generating a cutting gap (164) in the workpiece;
c) monitoring at least one geometric parameter of the cutting gap (164) during step b); and
d) regulating the monitored geometric parameter of the cutting gap (164) during step c) for harmonisation with a target value of the geometric parameter of the cutting gap, by varying a position of the focus (162) of the machining laser beam in the direction of propagation thereof; T
wherein step d) is carried out independently of a caustic of the machining laser beam; T
wherein in step d) the geometric parameter, in particular the width (B) of the cutting gap, is kept independent of the power of the machining laser source (14a);
**characterized in that** step d) is carried out additionally by varying at least one parameter selected from a width of the machining laser beam (16), a diameter of the machining laser beam, a surface curvature of at least one of the optical elements (17; 18), a focal length of an optical system that includes the at least one optical element, and an intensity distribution of the machining laser beam, in particular an intensity distribution of the machining laser beam perpendicular to the direction of propagation thereof.

2. The method according to claim 1, wherein step d) is carried out independently of a position of the beam waist of the machining laser beam.

3. The method according to any one of the preceding claims, wherein the target value of the geometric parameter used in step d) will be determined or is determined as a function of at least one element selected from: a type of laser machining; a material of the workpiece (12); a thickness of the workpiece; a shape of the workpiece; a power of the machining laser source (14a) with which the machining laser beam is generated; an angle of incidence of the machining laser beam (16) on the workpiece; a beam parameter product (BPP) of the machining laser beam; a focus diameter of the machining laser beam; and a divergence angle of the machining laser beam.

4. The method according to any one of the preceding claims, wherein as the at least one geometric parameter a width (B) of the cutting gap (164) is monitored.

5. The method according to any one of the preceding claims, wherein in step d) the geometric parameter, in particular the width (B) of the cutting gap, is kept constant.

6. The method according to any one of the preceding claims, wherein flame cutting is carried out and step d) is carried out by repeated and/or continuous adaptation of the focus (162) of the machining laser beam in the upper half of the cutting gap (164) or above the cutting gap; and/or wherein a fusion cutting is carried out and step d) is carried out by repeated and/or continuous adaptation of the focus (162) of the machining laser beam in the lower half of the cutting gap (164).

7. The method according to any one of the preceding claims, wherein in step c) a beam reflected and/or emitted by the workpiece (12), in particular by a laser machining zone of the workpiece, is recorded with a detector (20), in particular with a camera.

8. The method according to any one of the preceding claims, wherein in step c) the workpiece (12), in particular a laser machining zone of the workpiece, is illuminated, in particular with an illumination source or an illuminating laser beam.

9. The method according to any one of the preceding claims, wherein in step a) the at least one optical element (17; 18) is heated by the machining laser beam (16); and/or wherein in step a) the machining laser beam (16) is shaped, deflected, diverted, and/or reflected by the at least one optical element (17; 18).

10. An apparatus for laser cutting a workpiece, in particular with a method according to one of the preceding claims, having
- a machining laser source (14a) for generating a machining laser beam (16);
- at least one optical element (17; 18) for imaging the machining laser beam on the workpiece (12);
- a device (20) for monitoring at least one geometric parameter of a cutting gap (164) in the workpiece generated with the machining laser beam; and
- a device (22) for regulating the monitored geometric parameter of the cutting gap (164) for harmonisation with a target value of the geometric parameter of the cutting gap;
**characterized in that** the device (22) for regulating the monitored geometric parameter is designed in such a way that a position of the focus (162) of the machining laser beam is varied in the direction of propagation thereof, and additionally in such a way that at least one parameter is varied, selected from a width of the machining laser beam (16), a diameter of the machining laser beam, a surface curvature of at least one of the optical elements, a focal length of an optical system which contains the at least one optical element, and an intensity distribution of the machining laser beam, in particular an intensity distribution of the machining laser beam perpendicular to the direction of propagation thereof;
wherein the device (22) for regulating the monitored geometric parameter is designed or is adaptable in such a way that the geometric parameter is regulated independently of a caustic of the machining laser beam (16) ;
wherein the device (22) for regulating the monitored geometric parameter is designed or is adaptable in such a way that the geometric parameter, in particular the width (B) of the cutting gap, is kept independent of the power of the machining laser source (14a).

11. The apparatus according to claim 10, wherein the device (22) for regulating the monitored geometric parameter is designed or is adaptable in such a way that the geometric parameter is regulated independently of a position of the beam waist of the machining laser beam.

12. The apparatus according to any one of claims 10 through 11, wherein the target value of the geometric parameter used in step d) is determined as a function of at least one element selected from: a type of laser machining; a material of the workpiece (12); a thickness of the workpiece; a shape of the workpiece; a power of the machining laser source (14a) with which the machining laser beam (16) is generated; an angle of incidence of the machining laser beam on the workpiece; a beam parameter product (BPP) of the machining laser beam; a focus diameter of the machining laser beam; and, a divergence angle of the machining laser beam.

13. The apparatus according to any one of claims 10 through 12, wherein the at least one geometric parameter is a width (B) of the cutting gap (164).

14. The apparatus according to any one of claims 10 through 13, wherein the device (22) for regulating the monitored geometric parameter is designed or is adaptable in such a way that the geometric parameter, in particular the width (B) of the cutting gap, is kept constant.

15. The apparatus according to any one of claims 10 through 14, wherein the device (22) for regulating the monitored geometric parameter is designed or is adaptable in such a way that for flame cutting the focus (162) of the machining laser beam is repeatedly and/or continuously adapted in the upper half of the cutting gap (164) or above the cutting gap; and/or wherein the device (22) for regulating the monitored geometric parameter is designed or is adaptable in such a way that for fusion cutting the focus (162) of the machining laser beam is repeatedly and/or continuously adapted in the lower half of the cutting gap (164).

16. The apparatus according to any one of claims 10 through 15, wherein the device (20) for monitoring the at least one geometric parameter includes a detector, in particular a camera, for recording a beam reflected and/or emitted by the workpiece (12), in particular by a laser machining zone of the workpiece; and/or
wherein a device is provided for illuminating the workpiece, in particular a laser machining zone of the workpiece, in particular an illumination source or an illuminating laser beam; and/or
wherein the at least one optical element is designed or is adaptable in such a way that the machining laser beam is shaped, deflected, diverted, and/or reflected.

17. A use of an apparatus according to one of claims 10 through 16 for laser cutting a workpiece, wherein the laser cutting comprises at least one machining operation selected from fusion cutting, and flame cutting.

## Patentansprüche

1. Verfahren zum Laserbearbeiten eines Werkstücks, insbesondere zum Laserschneiden, zum
a) Erzeugen eines Bearbeitungslaserstrahls (16) und Abbilden des Bearbeitungslaserstrahls auf dem Werkstück (12) mit mindestens einem optischen Element (17, 18),
b) Bearbeiten des Werkstücks (12) mit dem abgebildeten Bearbeitungslaserstrahl und Erzeugen eines Schnittspalts (164) in dem Werkstück;
c) Überwachen von mindestens einem geometrischen Parameter des Schnittspalts (164) während des Schrittes b); und
d) Regeln des überwachten geometrischen Parameters des Schnittspalts (164) während des Schrittes c) zur Harmonisierung mit einem Sollwert des geometrischen Parameters des Schnittspalts, indem eine Position des Fokus (162) des Bearbeitungslaserstrahls in dessen Ausbreitungsrichtung variiert wird;
wobei der Schritt d) unabhängig von einer Kaustik des Bearbeitungslaserstrahls durchgeführt wird;
wobei in dem Schritt d) der geometrische Parameter, insbesondere die Breite (B) des Schnittspalts, unabhängig von der Leistung der Bearbeitungslaserquelle (14a) gehalten wird;
**dadurch gekennzeichnet, dass** der Schritt d) zusätzlich ausgeführt wird, indem mindestens ein Parameter variiert wird, der aus einer Breite des Bearbeitungslaserstrahls (16), einem Durchmesser des Bearbeitungslaserstrahls, einer Oberflächenkrümmung von mindestens einem der optischen Elemente (17; 18), einer Brennweite eines optischen Systems, das das mindestens eine optische Element einschließt, und einer Intensitätsverteilung des Bearbeitungslaserstrahls, insbesondere einer Intensitätsverteilung des Bearbeitungslaserstrahls senkrecht zu dessen Ausbreitungsrichtung, ausgewählt wird.

2. Verfahren nach Anspruch 1, wobei der Schritt d) unabhängig von einer Position der Strahltaille des Bearbeitungslaserstrahls durchgeführt wird.

3. Verfahren nach einem der vorhergehenden Ansprüche, wobei der Sollwert des in dem Schritt d) verwendeten geometrischen Parameters in Abhängigkeit von mindestens einem Element bestimmt wird oder ist, das ausgewählt wird aus: einer Art der Laserbearbeitung; einem Material des Werkstücks (12); einer Dicke des Werkstücks; einer Form des Werkstücks; einer Leistung der Bearbeitungslaserquelle (14a), mit der der Bearbeitungslaserstrahl erzeugt wird; einem Einfallswinkel des Bearbeitungslaserstrahls (16) auf das Werkstück; einem Strahlparameterprodukt (SPP) des Bearbeitungslaserstrahls; einem Fokusdurchmesser des Bearbeitungslaserstrahls; und einem Divergenzwinkel des Bearbeitungslaserstrahls.

4. Verfahren nach einem der vorhergehenden Ansprüche, wobei als der mindestens eine geometrische Parameter eine Breite (B) des Schnittspalts (164) überwacht wird.

5. Verfahren nach einem der vorhergehenden Ansprüche, wobei in dem Schritt d) der geometrische Parameter, insbesondere die Breite (B) des Schnittspalts, konstant gehalten wird.

6. Verfahren nach einem der vorhergehenden Ansprüche, wobei ein Brennschneiden durchgeführt wird und der Schritt d) durch wiederholte und/oder kontinuierliche Anpassung des Fokus (162) des Bearbeitungslaserstrahls in der oberen Hälfte des Schnittspalts (164) oder oberhalb des Schnittspalts durchgeführt wird; und/oder wobei ein Schmelzschneiden durchgeführt wird und der Schritt d) durch wiederholte und/oder kontinuierliche Anpassung des Fokus (162) des Bearbeitungslaserstrahls in der unteren Hälfte des Schnittspalts (164) durchgeführt wird.

7. Verfahren nach einem der vorhergehenden Ansprüche, wobei in dem Schritt c) ein von dem Werkstück (12), insbesondere von einem Laserbearbeitungsbereich des Werkstücks, reflektierter und/oder emittierter Strahl mit einem Detektor (20), insbesondere mit einer Kamera, erfasst wird.

8. Verfahren nach einem der vorhergehenden Ansprüche, wobei in dem Schritt c) das Werkstück (12), insbesondere ein Laserbearbeitungsbereich des Werkstücks, beleuchtet wird, insbesondere mit einer Beleuchtungsquelle oder einem beleuchtenden Laserstrahl.

9. Verfahren nach einem der vorhergehenden Ansprüche, wobei in dem Schritt a) das mindestens eine optische Element (17; 18) durch den Bearbeitungslaserstrahl (16) erwärmt wird; und/oder wobei in dem Schritt a) der Bearbeitungslaserstrahl (16) durch das mindestens eine optische Element (17; 18) geformt, abgelenkt, umgelenkt und/oder reflektiert wird.

10. Vorrichtung zum Laserschneiden eines Werkstücks, insbesondere mit einem Verfahren nach einem der vorhergehenden Ansprüche, aufweisend
- eine Bearbeitungslaserquelle (14a) zum Erzeugen eines Bearbeitungslaserstrahls (16);
- mindestens ein optisches Element (17; 18) zum Abbilden des Bearbeitungslaserstrahls auf dem Werkstück (12);
- eine Einrichtung (20) zum Überwachen von mindestens einem geometrischen Parameter eines mit dem Bearbeitungslaserstrahl erzeugten Schnittspalts (164) in dem Werkstück; und
- eine Einrichtung (22) zum Regeln des überwachten geometrischen Parameters des Schnittspalts (164) zur Harmonisierung mit einem Sollwert des geometrischen Parameters des Schnittspalts;
**dadurch gekennzeichnet, dass** die Einrichtung (22) zum Regeln des überwachten geometrischen Parameters derart ausgebildet ist, dass eine Position des Fokus (162) des Bearbeitungslaserstrahls in dessen Ausbreitungsrichtung variiert wird, und zusätzlich derart, dass mindestens ein Parameter variiert wird, der aus einer Breite des Bearbeitungslaserstrahls (16), einem Durchmesser des Bearbeitungslaserstrahls, einer Oberflächenkrümmung von mindestens einem der optischen Elemente, einer Brennweite eines optischen Systems, das das mindestens eine optische Element einschließt, und einer Intensitätsverteilung des Bearbeitungslaserstrahls, insbesondere einer Intensitätsverteilung des Bearbeitungslaserstrahls senkrecht zu dessen Ausbreitungsrichtung, ausgewählt wird;
wobei die Einrichtung (22) zum Regeln des überwachten geometrischen Parameters derart ausgebildet oder anpassbar ist, dass der geometrische Parameter unabhängig von einer Kaustik des Bearbeitungslaserstrahls (16) geregelt wird;
wobei die Einrichtung (22) zum Regeln des überwachten geometrischen Parameters derart ausgebildet oder anpassbar ist, dass der geometrische Parameter, insbesondere die Breite (B) des Schnittspalts, unabhängig von der Leistung der Bearbeitungslaserquelle (14a) gehalten wird.

11. Vorrichtung nach Anspruch 10, wobei die Einrichtung (22) zum Regeln des überwachten geometrischen Parameters derart ausgebildet oder anpassbar ist, dass der geometrische Parameter unabhängig von einer Position der Strahltaille des Bearbeitungslaserstrahls geregelt wird.

12. Vorrichtung nach einem der Ansprüche 10 bis 11, wobei der Sollwert des in dem Schritt d) verwendeten geometrischen Parameters in Abhängigkeit von mindestens einem Element bestimmt wird, das ausgewählt wird aus: einer Art der Laserbearbeitung; einem Material des Werkstücks (12); einer Dicke des Werkstücks, einer Form des Werkstücks, einer Leistung der Bearbeitungslaserquelle (14a), mit der der Bearbeitungslaserstrahl (16) erzeugt wird; einem Einfallswinkel des Bearbeitungslaserstrahls auf das Werkstück; einem Strahlparameterprodukt (SPP) des Bearbeitungslaserstrahls; einem Fokusdurchmesser des Bearbeitungslaserstrahls; und einem Divergenzwinkel des Bearbeitungslaserstrahls.

13. Vorrichtung nach einem der Ansprüche 10 bis 12, wobei der mindestens eine geometrische Parameter eine Breite (B) des Schnittspalts (164) ist.

14. Vorrichtung nach einem der Ansprüche 10 bis 13, wobei die Einrichtung (22) zum Regeln des überwachten geometrischen Parameters derart ausgebildet oder anpassbar ist, dass der geometrische Parameter, insbesondere die Breite (B) des Schnittspalts, konstant gehalten wird.

15. Vorrichtung nach einem der Ansprüche 10 bis 14, wobei die Einrichtung (22) zum Regeln des überwachten geometrischen Parameters derart ausgebildet oder anpassbar ist, dass zum Brennschneiden der Fokus (162) des Bearbeitungslaserstrahls wiederholt und/oder kontinuierlich in der oberen Hälfte des Schnittspalts (164) oder oberhalb des Schnittspalts angepasst wird; und/oder wobei die Einrichtung (22) zum Regeln des überwachten geometrischen Parameters derart ausgebildet oder anpassbar ist, dass zum Schmelzschneiden der Fokus (162) des Bearbeitungslaserstrahls wiederholt und/oder kontinuierlich in der unteren Hälfte des Schnittspalts (164) angepasst wird.

16. Vorrichtung nach einem der Ansprüche 10 bis 15, wobei die Einrichtung (20) zum Überwachen des mindestens einen geometrischen Parameters einen Detektor, insbesondere eine Kamera, zum Erfassen eines vom Werkstück (12), insbesondere von einem Laserbearbeitungsbereich des Werkstücks, reflektierten und/oder emittierten Strahls einschließt; und/oder wobei eine Einrichtung zum Beleuchten des Werkstücks, insbesondere eines Laserbearbeitungsbereichs des Werkstücks, insbesondere eine Beleuchtungsquelle oder ein beleuchtender Laserstrahl, vorgesehen ist; und/oder wobei das mindestens eine optische Element derart ausgebildet oder anpassbar ist, dass der Bearbeitungslaserstrahl geformt, abgelenkt, umgelenkt und/oder reflektiert wird.

17. Verwendung einer Vorrichtung nach einem der Ansprüche 10 bis 16 zum Laserschneiden eines Werkstücks, wobei das Laserschneiden mindestens einen Bearbeitungsvorgang umfasst, der aus dem Schmelzschneiden und dem Brennschneiden ausgewählt wird.

## Revendications

1. Procédé d'usinage laser d'une pièce, en particulier pour la découpe au laser, avec
a) génération d'un faisceau laser d'usinage (16) et formation de l'image du faisceau laser d'usinage sur la pièce (12) avec au moins un élément optique (17, 18) ;
b) usinage de la pièce (12) avec le faisceau laser d'usinage imagé et génération d'un espace de découpe (164) dans la pièce ;
c) surveillance d'au moins un paramètre géométrique de l'espace de découpe (164) pendant l'étape b) ; et
d) régulation du paramètre géométrique surveillé de l'espace de découpe (164) lors de l'étape c) pour l'harmonisation avec une valeur cible du paramètre géométrique de l'espace de découpe, par la variation d'une position du foyer (162) du faisceau laser d'usinage dans la direction de sa propagation ;
dans lequel l'étape d) est réalisée indépendamment d'une caustique du faisceau laser d'usinage ;
dans lequel, à l'étape d), le paramètre géométrique, en particulier la largeur (B) de l'espace de découpe, est maintenu indépendant de la puissance de la source du laser d'usinage (14a) ;
**caractérisé en ce que** l'étape d) est réalisée en outre en faisant varier au moins un paramètre choisi parmi une largeur du faisceau laser d'usinage (16), un diamètre du faisceau laser d'usinage, une courbure de surface d'au moins un des éléments optiques (17 ; 18), une distance focale d'un système optique qui comprend ledit au moins un élément optique, et une distribution d'intensité du faisceau laser d'usinage, en particulier une distribution d'intensité du faisceau laser d'usinage perpendiculaire à sa direction de propagation.

2. Procédé selon la revendication 1, dans lequel l'étape d) est réalisée indépendamment d'une position de la taille du faisceau du faisceau laser d'usinage.

3. Procédé selon l'une quelconque des revendications précédentes, dans lequel la valeur cible du paramètre géométrique utilisé à l'étape d) sera ou est déterminée en fonction d'au moins un élément choisi parmi les suivants : un type d'usinage laser ; un matériau de la pièce (12) ; une épaisseur de la pièce ; une forme de la pièce ; une puissance de la source du laser d'usinage (14a) avec laquelle le faisceau laser d'usinage est généré ; un angle d'incidence du faisceau laser d'usinage (16) sur la pièce ; un produit des paramètres du faisceau (BPP) du faisceau laser d'usinage ; un diamètre de focalisation du faisceau laser d'usinage et un angle de divergence du faisceau laser d'usinage.

4. Procédé selon l'une quelconque des revendications précédentes, dans lequel une largeur (B) de l'espace de découpe (164) est surveillée en tant que l'au moins un paramètre géométrique.

5. Procédé selon l'une quelconque des revendications précédentes, dans lequel le paramètre géométrique à l'étape d), en particulier la largeur (B) de l'espace de découpe, est maintenu constant.

6. Procédé selon l'une quelconque des revendications précédentes, dans lequel l'oxycoupage est réalisé et l'étape d) est réalisée par adaptation répétée ou continue de la focalisation (162) du faisceau laser d'usinage dans la moitié supérieure de l'intervalle de découpe (164) ou au-dessus de l'espace de découpe ; et/ou dans lequel une découpe par fusion est réalisée et l'étape d) est réalisée par adaptation répétée et/ou continue de la focalisation (162) du faisceau laser d'usinage dans la moitié inférieure de l'espace de découpe (164).

7. Procédé selon l'une quelconque des revendications précédentes, dans lequel un faisceau réfléchi et/ou émis par la pièce (12) à l'étape c), notamment par une zone d'usinage laser de la pièce, est enregistré avec un détecteur (20), notamment avec une caméra.

8. Procédé selon l'une quelconque des revendications précédentes, dans lequel, à l'étape c), la pièce (12), en particulier une zone d'usinage laser de la pièce, est éclairée, notamment avec une source d'éclairage ou un faisceau laser d'éclairage.

9. Procédé selon l'une quelconque des revendications précédentes, dans lequel, à l'étape a), l'au moins un élément optique (17 ; 18) est chauffé par le faisceau laser d'usinage (16) ; et/ou dans lequel, à l'étape a), le faisceau laser d'usinage (16) est façonné, dévié et/ou réfléchi par ledit au moins un élément optique (17 ; 18).

10. Dispositif pour découper au laser une pièce, en particulier avec un procédé selon l'une quelconque des revendications précédentes, comportant
- une source de laser d'usinage (14a) pour générer un faisceau laser d'usinage (16) ;
- au moins un élément optique (17 ; 18) pour imager le faisceau laser d'usinage sur la pièce (12) ;
- un dispositif (20) pour surveiller au moins un paramètre géométrique d'un espace de découpe (164) dans la pièce généré avec le faisceau laser d'usinage ; et
- un dispositif (22) pour réguler le paramètre géométrique surveillé de l'espace de découpe (164) pour une harmonisation avec une valeur cible du paramètre géométrique de l'espace de découpe ;
**caractérisé en ce que** le dispositif (22) pour réguler le paramètre géométrique surveillé est conçu de telle sorte qu'une position du foyer (162) du faisceau laser d'usinage varie dans la direction de sa propagation, et en outre de telle sorte que varie au moins un paramètre choisi parmi une largeur du faisceau laser d'usinage (16), un diamètre du faisceau laser d'usinage, une courbure de surface d'au moins un des éléments optiques, une distance focale d'un système optique qui contient l'au moins un élément optique, et une répartition d'intensité du faisceau laser d'usinage, notamment une répartition d'intensité du faisceau laser d'usinage perpendiculaire à sa direction de propagation ; dans lequel le dispositif (22) pour réguler le paramètre géométrique surveillé est conçu ou est adaptable de telle sorte que le paramètre géométrique est régulé indépendamment d'une caustique du faisceau laser d'usinage (16) ;
dans lequel le dispositif (22) pour réguler le paramètre géométrique surveillé est conçu ou est adaptable de telle sorte que le paramètre géométrique, en particulier la largeur (B) de l'espace de découpe, est maintenu indépendant de la puissance de la source du laser d'usinage (14a).

11. Dispositif selon la revendication 10, dans lequel le dispositif (22) pour réguler le paramètre géométrique surveillé est conçu ou est adaptable de telle sorte que le paramètre géométrique est régulé indépendamment d'une position de la taille de faisceau du faisceau laser d'usinage.

12. Dispositif selon l'une quelconque des revendications 10 à 11, dans lequel la valeur cible du paramètre géométrique utilisé à l'étape d) est déterminée en fonction d'au moins un élément choisi parmi les suivants : un type d'usinage laser ; un matériau de la pièce (12) ; une épaisseur de la pièce ; une forme de la pièce ; une puissance de la source laser d'usinage (14a) avec laquelle le faisceau laser d'usinage (16) est généré ; un angle d'incidence du faisceau laser d'usinage sur la pièce ; un produit de paramètre de faisceau du faisceau laser d'usinage ; un diamètre de focalisation du faisceau laser d'usinage et un angle de divergence du faisceau laser d'usinage.

13. Dispositif selon l'une quelconque des revendications 10 à 12, dans lequel l'au moins un paramètre géométrique est une largeur (B) de l'espace de découpe (164).

14. Dispositif selon l'une quelconque des revendications 10 à 13, dans lequel le dispositif (22) pour réguler le paramètre géométrique surveillé est conçu ou est adaptable de telle sorte que le paramètre géométrique, en particulier la largeur (B) de l'espace de découpe, est maintenu constant.

15. Dispositif selon l'une quelconque des revendications 10 à 14, dans lequel le dispositif (22) pour réguler le paramètre géométrique surveillé est conçu ou est adaptable de telle sorte que pour l'oxycoupage, le foyer (162) du faisceau laser d'usinage est répété et/ou adapté continuellement dans la moitié supérieure de l'espace de découpe (164) ou au-dessus de l'espace de découpe ; et/ou dans lequel le dispositif (22) pour réguler le paramètre géométrique surveillé est conçu ou est adaptable de telle sorte que pour la découpe par fusion, le foyer (162) du faisceau laser d'usinage est adapté de manière répétée et/ou continue dans la moitié inférieure de l'espace de découpe (164).

16. Dispositif selon l'une quelconque des revendications 10 à 15, dans lequel le dispositif (20) de surveillance de l'au moins un paramètre géométrique comprend un détecteur, notamment une caméra, pour enregistrer un faisceau réfléchi et/ou émis par la pièce (12), notamment par une zone d'usinage laser de la pièce ; et/ou dans lequel un dispositif est prévu pour éclairer la pièce, notamment une zone d'usinage laser de la pièce, notamment une source d'éclairage ou un faisceau laser d'éclairage ; et/ou dans lequel l'au moins un élément optique est conçu ou adaptable de telle sorte que le faisceau laser d'usinage est façonné, dévié et/ou réfléchi.

17. Utilisation d'un dispositif selon l'une quelconque des revendications 10 à 16 pour découper au laser une pièce, dans laquelle la découpe au laser comprend au moins une opération d'usinage sélectionnée parmi la découpe par fusion et l'oxycoupage.
